# EUROPÄISCHE PATENTSCHRIFT

(11) **EP 3 628 983 B1**
(45) Veröffentlichungstag und Bekanntmachung des Hinweises auf die Patenterteilung: **22.03.2023**
(21) Anmeldenummer: 19197466.6
(22) Anmeldetag: 16.09.2019
(51) Int. Cl.: G01F 1/74, G01F 1/84, G01F 25/10, G01F 15/02, G01N 9/00

(54) **VERFAHREN ZUM ERMITTELN DES GASANTEILS IN EINEM EIN CORIOLIS-MASSEDURCHFLUSSMESSGERÄT DURCHSTRÖMENDEN MEDIUM UND CORIOLIS-MASSEDURCHFLUSSMESSGERÄT**
METHOD FOR DETERMINING THE GAS CONTENT IN A MEDIUM FLOWING THROUGH A CORIOLIS MASS FLOW METER AND CORIOLIS MASS FLOW METER
PROCÉDÉ DE DÉTERMINATION DE LA TENEUR EN GAZ DANS UN MILIEU TRAVERSANT UN APPAREIL DE MESURE DE DÉBIT MASSIQUE DU TYPE CORIOLIS ET APPAREIL DE MESURE DE DÉBIT MASSIQUE DU TYPE CORIOLIS

(30) Priorität: 25.09.2018 DE 102018123534
(43) Veröffentlichungstag der Anmeldung: 01.04.2020
(73) Patentinhaber: Krohne Messtechnik GmbH, 47058 Duisburg (DE)
(72) Erfinder: Storm, Ralf, 45131 Essen (DE); Kunze, Johannes, 44892 Bochum (DE)
(74) Vertreter: Gesthuysen Patentanwälte

(56) Entgegenhaltungen:
- US-A1- 2002 033 043
- US-A1- 2005 022 611
- US-A1- 2005 138 993
- US-A1- 2006 096 388
- US-B1- 6 327 914

## Beschreibung

Die Erfindung betrifft ein Verfahren zum Ermitteln des Gasanteils in dem ein Coriolis-Massedurchflussmessgerät durchströmenden Medium, wobei das Coriolis-Massedurchflussmessgerät mindestens ein Messrohr, mindestens einen Schwingungserzeuger, mindestens zwei Schwingungsaufnehmer und mindestens eine Ansteuerungs- und Auswerteeinheit aufweist, wobei in einem ρ₁₀₀-Schritt der Dichtewert ρ₁₀₀ des gaslosen Mediums ermittelt wird und wobei in einem ρₘₑₛₛ-Schritt der Dichtewert ρₘₑₛₛ des durch das Messrohr strömenden Mediums gemessen wird. Darüber hinaus betrifft die Erfindung auch ein diesbezügliches Coriolis-Massedurchflussmessgerät, das im Betrieb ein derartiges Verfahren durchführt.

Coriolis-Massedurchflussmessgeräte und Verfahren zum Betreiben von Coriolis-Massedurchflussmessgeräten sind seit vielen Jahrzehnten in ganz unterschiedlicher Ausgestaltung bekannt. Mit Coriolis-Massedurchflussmessgeräten lassen sich hohe Messgenauigkeiten erzielen, die teilweise besser sind als 0,1% vom Messwert, sodass Coriolis-Massedurchflussmessgeräte beispielsweise auch im eichpflichtigen Verkehr eingesetzt werden.

Coriolis-Massedurchflussmessgeräte gehören zur Klasse der Vibrations-Messgeräte. Ihre Funktionsweise beruht darauf, dass wenigstens ein von einem Medium durchströmtes Messrohr von einem Schwingungserzeuger zu einer Schwingung angeregt wird. Dieser Schwingungserzeuger ist häufig ein elektrischer Antrieb, der üblicherweise als elektromagnetischer Antrieb vorliegt. Bei einem solchen elektromagnetischen Antrieb wird eine Spule von einem elektrischen Strom als elektrisches Anregungssignal durchflossen, wobei mit dem Spulenstrom in Verbindung mit der Spule unmittelbar eine Kraftwirkung auf das Messrohr ausübbar ist. Die Funktionsweise von Coriolis-Massedurchflussmessgeräten beruht darauf, dass das massebehaftete Medium aufgrund der durch zwei orthogonale Bewegungen - die der Strömung und die des Messrohres - hervorgerufene Coriolis-Trägheitskraft auf die Wandung des Messrohrs rückwirkt. Diese Rückwirkung des Mediums auf das Messrohr führt zu einer Änderung der Messrohrgeschwindigkeit im Vergleich zum undurchströmten Schwingungszustand des Messrohres. Durch die Erfassung dieser Besonderheiten der Schwingungen des durchströmten Coriolis-Messrohrs (Phasenverschiebung zwischen ein- und auslaufseitiger Messrohrschwingung) kann der Massedurchfluss durch das Messrohr mit hoher Genauigkeit bestimmt werden.

Von besonderer Bedeutung sind die Eigenfrequenzen der schwingfähigen Teile des Coriolis-Massedurchflussmessgeräts, im Wesentlichen also die Eigenfrequenzen des durchströmten Messrohres als Schwingelement, weil die Arbeitspunkte des Coriolis-Massedurchflussmessgeräts üblicherweise auf Eigenfrequenzen des Messrohrs gelegt werden, um die erforderlichen Schwingungen für die Induktion der Coriolis-Kräfte mit einem minimalen Energieaufwand einprägen zu können. Die dann von dem Messrohr ausgeführten Schwingungen weisen eine bestimmte Form auf, die als Eigenform der jeweiligen Anregung bezeichnet wird. Ein weiterer Grund für die besondere Bedeutung von Eigenfrequenzen bei Coriolis-Massedurchflussmessgeräten ist die unmittelbare physikalische Verknüpfung zwischen der Eigenfrequenz des durchströmten Messrohrs in der jeweiligen Eigenform und der effektiv ausgelenkten Schwingmasse (Messrohrmasse und Masse des Mediums im Messrohr). Über diesen Zusammenhang kann die Dichte des Mediums in dem Messrohr bestimmt werden, was für die vorliegende Erfindung von Bedeutung ist, auch wenn es sich nicht um die primär interessierende Messgrö-ße eines Durchflussmessgeräts handelt.

Wenn sich die Masse des schwingfähigen Elements ändert, also die Masse des mit dem Medium durchströmten Messrohres, dann ändert sich auch die Resonanzfrequenz des angeregten bzw. untersuchten Schwingungsmodus;. Wird das Messrohr bei unveränderter Frequenz zur Schwingung angeregt, wird die angeregte Schwingung aufgrund des verschobenen Resonanzpunktes gedämpft. Verschiedene Verfahren zum Betreiben eines Coriolis-Massedurchflussmessgerätes beschäftigen sich damit, eine veränderliche Resonanzfrequenz zu erkennen und auch die Frequenz der Anregung in den Resonanzpunkt bei veränderlicher Resonanzfrequenz nachzuführen; hierzu wird beispielhaft verwiesen auf die DE 10 2016 190 952 A1 oder auch die DE 10 2013 020 603 A1.

Eine besondere Herausforderung für den Betrieb eines Coriolis-Massedurchflussmessgeräts stellt das Auftreten einer Mehrphasenströmung dar, die einen gasförmigen Anteil aufweist. Hier wird häufig auch nur von einer Zweiphasenströmung gesprochen, wobei diesem Begriff dann das Verständnis zugrunde liegt, dass diese Strömung eine gasförmige Phase und eine nicht-gasförmige Phase aufweist, die ihrerseits flüssige und feste Bestandteile aufweisen kann. In diesem allgemeinen Sinne soll auch hier der Begriff "Zweiphasenströmung" verstanden werden.

Das Auftreten einer Zweiphasenströmung (also Übergang von einer einphasigen Strömung mit nur flüssigem oder flüssig-festem Bestandteil zu einer Strömung mit Gasphase) ist deshalb problematisch, weil Gaseinschlüsse die Messgenauigkeit stark beeinflussen können und auch den sicheren Betrieb eines Coriolis-Massedurchflussmessgeräts erschweren oder sogar unmöglich machen. Die gleichen Probleme ergeben sich auch bei variierendem Gasanteil in dem strömenden Medium. Dabei können Gaseinschlüsse im Medium durchaus gewollt sein, beispielsweise bei Anwendungen in der Lebensmittelindustrie, in der verarbeitete Medien beispielsweise eine luftig aufgeschlagene Konsistenz haben können.

Unabhängig davon, ob Medien beabsichtigt oder unbeabsichtigt Gaseinschlüsse aufweisen, leidet die Messgenauigkeit unter dem Umstand, dass nicht mehr die gesamte Masse des strömenden Mediums durch das vibrierende Messrohr in vollem Umfang ausgelenkt wird, sondern teilweise nur noch einen Teil der Auslenkung erfährt. Dies kann zum Beispiel daran liegen, dass weniger dichte Anteile im Medium dichtere Anteile umströmen, was auch für Bewegungskomponenten orthogonal zur Strömungsrichtung gilt, die für die Coriolis-Messung essenziell sind. Von Bedeutung kann auch die Kompression bzw. Dekompression gasförmiger Anteile im Medium sein, die durch die Massenträgheit schwererer flüssiger oder fester Mediumanteile bewirkt werden. Je nach Ausprägung der Gaseinschlüsse und der Form der Strömungsregime (geschichtet, wellenförmig, blasenförmig, tröpfchenförmig) können Gaseinschlüsse auch zum Aussetzen des Messbetriebes führen, weil eine durchgängige Messung nicht mehr gewährleistet werden kann.

In der Vergangenheit sind große Anstrengungen darauf gerichtet worden, Zweiphasenströmungen zu erkennen und durch geeignete regelungstechnische Maßnahmen auf erkannte Zweiphasenströmungen zu reagieren, sodass der Messbetrieb gleichwohl fortgesetzt werden kann. Exemplarisch werden hier genannt die DE 10 2005 012 505 A1, die DE 10 2006 031 198 A1 und die DE 10 2008 039 012 A1. Verschiedene dieser Maßnahmen sind Bestandteil des sogenannten "Entrained Gas Management" der Anmelderin.

Die DE 10 2006 017 676 A1 wird exemplarisch genannt für die reine Detektion einer Zweiphasenströmung, wobei hier verschiedene Zustandsgrößen und Änderungen dieser Zustandsgrößen - teilweise statistisch - ausgewertet werden, um ein Zweiphasen-Signal zu erhalten, das das Vorliegen bzw. das Nicht-Vorliegen einer Zweiphasenströmung mit großer Treffsicherheit indiziert aber nicht zuverlässig quantisiert.

Aus der US 2005/138993 A1 und der US 2002/033043 A1 sind gattungsgemäße Verfahren bekannt, mit Coriolis-Massedurchflussmessgeräten eine Dichtebestimmung bei einer Zweiphasenströmung vorzunehmen. Insbesondere ist bekannt, den Dichtewert des gaslosen Mediums zu ermitteln und im Betrieb des Coriolis-Massedurchflussmessgeräts den Dichtewert des durch das Messrohr strömenden Mediums zu messen.

Vor dem aufgezeigten Hintergrund besteht ein Interesse daran, während des Messbetriebs nicht nur eine Aussage darüber zu enthalten, ob möglicherweise eine Zweiphasenströmung vorliegt, sondern vielmehr auch eine quantitative Angabe über den Gaseinteil in dem Medium zu erhalten, das durch das Messrohr eines Coriolis-Massedurchflussmessgeräts strömt.

Die zuvor hergeleitete Aufgabe wird durch verschiedene Verfahrensschritte gelöst, die üblicherweise in der Ansteuerungs- und Auswerteeinheit des Coriolis-Massedurchflussmessgeräts implementiert sind. Die Ansteuerungs- und Auswerteeinheit ist mit den Organen des Coriolis-Massedurchflussmessgerätes funktional verbunden, sodass der Schwingungserzeuger angesteuert werden kann und die von den Schwingungsaufnehmern bereitgestellten Signale aufgenommen werden können. Dabei wird es sich bei der Ansteuerungs- und Auswerteeinheit typischerweise um ein digitales Abtastsystem handeln, das beispielsweise auf dem Einsatz von digitalen Signalprozessoren basiert. Dazu gehören selbstverständlich auch vermittelnde Schaltungen zur Signalverarbeitung, wie beispielsweise Analog/Digital-Wandler, Digital/Analog-Wandler und möglicherweise elektronische Leistungskomponenten, worauf es im Rahmen der vorliegenden Erfindung im Detail jedoch nicht ankommt.

Von Bedeutung ist vorbereitend für die Durchführung der erfindungsgemäßen Verfahrensschritte, dass zunächst der Dichtewert ρ₁₀₀ des gaslosen Mediums ermittelt wird (ρ₁₀₀-Schritt). Die Kenntnis der Dichte des durch das Messrohr strömenden Mediums, wenn es keine Gasbestandteile enthält, ist von grundlegender Bedeutung für die Berechnung des Gasanteils in dem Medium, sofern es Gasanteile beinhaltet. Der Dichtewert ρ₁₀₀ des gaslosen Mediums kann dabei vorgegeben und in der Ansteuerungs- und Auswerteeinheit abgelegt sein, er kann theoretisch ermittelt worden sein und er kann schließlich auf einer Messung beruhen.

In einem weiteren vorbereitenden Schritt wird der Dichtewert ρₘₑₛₛ des durch das Messrohr strömenden Mediums gemessen (ρₘₑₛₛ-Schritt), beispielsweise indem die Resonanzfrequenz des Systems aus Messrohr und durchströmendem Medium ermittelt wird.

In einem weiteren Verfahrensschritt wird mit dem Dichtewert ρ₁₀₀ des gaslosen Mediums und dem Dichtewert ρₘₑₛₛ des aktuell durch das Messrohr strömenden Mediums ein Maß GVQ für den Gasanteil des durch das Messrohr strömenden Mediums berechnet (GVQ-Schritt), sodass also eine aussagekräftige Größe über den Gasanteil in dem Medium vorliegt. Diese Größe stellt eine quantitative Aussage über den Gasanteil im Medium dar, sie ist weit mehr als eine reine Indikatorgröße über das Vorhandensein bzw. NichtVorhandensein von Gas in dem das Messrohr durchströmenden Medium.

Schließlich wird das Maß GVQ für den Gasanteil des durch das Messrohr strömenden Mediums ausgegeben, sodass der GVQ-Wert für weitere - auch messgerätinterne - Berechnungen herangezogen werden kann oder beispielsweise über eine Anzeige ausgegeben wird oder über einen Kommunikations-Anschluss (Feldbus) nach extern ausgegeben wird und so der Prozess-Überwachung dienen kann; dies ist eine beispielhafte, nicht abschließende Aufzählung.

Gemäß einer Weiterbildung des erfindungsgemäßen Verfahrens ist vorgesehen, dass in einem Indikatorschritt eine Indikatorgröße I₂₋ₚₕₐₛₑ für das Vorliegen von Gaseinschlüssen in dem das Messrohr durchströmenden Medium bestimmt wird. Eine derartige Indikatorgröße zeigt lediglich an, ob eine Zweiphasenströmung vorliegt oder auch nicht. Vorzugsweise wird die Indikatorgröße I₂₋ₚₕₐₛₑ im Betrieb des Coriolis-Massedurchflussmessgerätes fortwährend bestimmt. Das Coriolis-Massedurchflussmessgerät verfügt damit immer über Kenntnis über den Zustand des das Messrohr durchströmenden Mediums hinsichtlich des Vorliegens einer gasförmigen Phase.

Die vorbeschriebene Maßnahme ermöglicht es nun bei einer Weiterbildung des Verfahrens, den ρ₁₀₀-Schritt durch Messung der Dichte des durch das Messrohr strömenden Mediums dann auszuführen, wenn die Indikatorgröße I₂₋ₚₕₐₛₑ indiziert, dass das das Messrohr durchströmende Medium frei von Gaseinschlüssen ist. Das so weitergebildete Verfahren nutzt also die Gelegenheit , beim Vorliegen einer gasfreien Mediumströmung die Dichte des gaslosen Mediums aktuell zu bestimmen. Dadurch kann auch auf eine variierende Dichte des gaslosen Mediums reagiert werden. Vorzugsweise ist vorgesehen, dass der zuletzt ermittelte Dichtewert ρ₁₀₀ des gaslosen Mediums in dem GVQ-Schritt verwendet wird, sodass für eine Berechnung des Gasanteils immer der aktuellste Dichtewert des gaslosen Mediums verwendet wird.

In einer weiteren Ausgestaltung des Verfahrens löst die Indikatorgröße I₂₋ₚₕₐₛₑ den ρₘₑₛₛ-Schritt aus, und zwar genau dann, wenn die Indikatorgröße I₂₋ₚₕₐₛₑ indiziert, dass das das Messrohr durchströmende Medium Gaseinschlüsse aufweist. In diesem Fall ist klar, dass die Dichtebestimmung nicht zu einem neuen Dichtewert ρ₁₀₀ des gaslosen Mediums führt, sondern vielmehr zu einem Dichtewert ρₘₑₛₛ des gasbehafteten Mediums, auf dessen Grundlage dann ein neuer Wert für das Maß GVQ für den Gasanteil des durch das Messrohr strömenden Mediums berechnet werden kann.

In einer Ausgestaltung des Verfahrens wird als Maß GVQ für den Gasanteil des durch das Messrohr strömenden Mediums das Gas-Volumen-Verhältnis GVR berechnet (gas volume ratio oder void ratio), das dem Quotienten aus dem Gasvolumen und dem Volumen des nicht-gasförmigen Mediumanteils entspricht und sich demnach berechnet aus dem Quotienten aus der Differenz von ρ₁₀₀ und ρₘₑₛₛ und ρₘₑₛₛ ((ρ₁₀₀ - ρₘₑₛₛ)/ρₘₑₛₛ). In einer anderen Ausgestaltung des Verfahrens wird als Maß GVQ für den Gasannteil des durch das Messrohr strömenden Medium der Gas-Volumen-Anteil GVF berechnet (gas volume fraction oder void fraction), bei dem der Anteil des Gasvolumens auf das untersuchte Gesamtvolumen bezogen wird und sich demzufolge berechnet aus dem Quotienten aus der Differenz zwischen der Dichte ρ₁₀₀ und der Dichte ρₘₑₛₛ und der Dichte ρ₁₀₀ ((ρ₁₀₀ - ρₘₑₛₛ)/ρ₁₀₀).

Eine bevorzugte Ausgestaltung des Verfahrens sieht vor, dass in dem GVQ-Schritt das Maß GVQ für den Gasanteil des durch das Messrohr strömenden Mediums unter der Annahme berechnet wird, dass die Dichte des Gasanteils vernachlässigbar ist, insbesondere null ist. Die oben angegebenen Berechnungen für das Gas-Volumen-Verhältnis und den Gas-Volumen-Anteil beruhen auf dieser Annahme.

In einer davon abweichenden Weiterentwicklung des Verfahrens ist vorgesehen, dass der Mediumdruck pₘ des durch das Messrohr strömenden Mediums gemessen wird und mit dem gemessenen Mediumdruck pₘ und dem gemessenen Dichtewert ρₘₑₛₛ des durch das Messrohr strömenden Mediums ein korrigierter Dichtewert ρₘₑₛₛ(pₘ) ermittelt wird, wobei der korrigierte Dichtewert ρₘₑₛₛ(pₘ) dem weiteren Verfahren dann als gemessener Dichtewert ρₘₑₛₛ zugrunde gelegt wird. Der Zusammenhang ρₘₑₛₛ(pₘ) kann dabei experimentell ermittelt werden, er kann aber auch aufgrund von theoretischen Überlegungen hergeleitet werden. Der Zusammenhang kann in Form einer Wertetabelle abgelegt sein oder aber auch durch einen mathematischen Zusammenhang abgebildet werden. Auf die Art der Hinterlegung des Zusammenhangs ρₘₑₛₛ(pₘ) kommt es im Detail nicht an, wichtig ist, dass bei dieser Ausgestaltung der Zusammenhang überhaupt berücksichtigt wird.

Bei einer weiteren Ausgestaltung des Verfahrens ist es möglich, auf einen Grenzwert für den Gasanteil des durch das Messrohr strömenden Mediums zu reagieren. Dies wird bei einer Ausgestaltung dadurch bewerkstelligt, dass das berechnete Maß GVQ für den Gasanteil des durch das Messrohr strömenden Mediums mit einem Grenzwert GVQₗᵢₘᵢₜ für den Gasanteil des durch das Messrohr strömenden Mediums verglichen wird und bei einer bestimmten Abweichung des berechneten Maßes GVQ vom Grenzwert GVQₗᵢₘᵢₜ eine Statusmeldung ausgegeben wird. Diese Abweichung kann null sein oder auch von null verschieden sein. Die Statusmeldung kann lediglich darin bestehen, dass in einem Register der Ansteuerungs- und Auswerteeinheit ein Bit gesetzt wird oder eine Speicherzelle mit einem entsprechenden Wert beschrieben wird, die Statusmeldung kann in Form einer Busnachricht über eine Busschnittstelle ausgegeben werden, die Statusmeldung kann auch über eine Anzeige des Coriolis-Massedurchflussmessgeräts angezeigt werden; es sind hier viele weitere Möglichkeiten der Ausgabe des Statussignals denkbar. Bei einer Ausgestaltung des vorgenannten Verfahrens wird eine Hysterese dadurch realisiert, dass die bestimmte Abweichung des berechneten Maßes GVQ vom Grenzwert GVQₗᵢₘᵢₜ ungleich null gewählt wird, beispielsweise also GVQ_{toleranz}. Bei Überschreiten des Summenwertes aus dem Grenzwert GVQₗᵢₘᵢₜ zuzüglich dem Toleranzwert GVQ_{toleranz} wird eine Statusmeldung ausgegeben. Umgekehrt wird die Statusmeldung gelöscht, wenn die Differenz aus dem Grenzwert GVQₗᵢₘᵢₜ und dem Toleranzwert GVQ_{toleranz} unterschritten wird.

Die eingangs hergeleitete Aufgabe wird bei dem hier in Rede stehenden Coriolis-Massedurchflussmessgerät dadurch gelöst, dass die zuvor beschriebenen Verfahrensschritte im Betrieb des Coriolis-Massedurchflussmessgeräts ausgeführt werden. Ein Großteil der Schritte wird dabei von der Ansteuerungs- und Auswerteeinheit ausgeführt. Konkret bedeutet das also, dass die Ansteuerungs- und Auswerteeinheit so ausgestaltet ist, dass sie im Betrieb des Coriolis-Massedurchflussmessgeräts in einem ρ₁₀₀-Schritt den Dichtewert ρ₁₀₀ des gaslosen Mediums ermittelt, in einem ρₘₑₛₛ-Schritt den Dichtewert ρₘₑₛₛ des durch das Messrohr strömenden Mediums misst, in einem GVQ-Schritt mit dem Dichtewert ρ₁₀₀ und dem Dichtewert ρₘₑₛₛ ein Maß GVQ für den Gasanteil des durch das Messrohr strömenden Mediums berechnet und das Maß GVQ für den Gasanteil des durch das Messrohr strömenden Mediums ausgibt.

Im Einzelnen gibt es nun eine Vielzahl von Möglichkeiten, das dargestellte Verfahren zum Ermitteln des Gasanteils in dem ein Coriolis-Massedurchflussmessgerät durchströmenden Medium und das entsprechende Coriolis-Massedurchflussmessgerät auszugestalten und weiterzubilden. Dies wird nachfolgend anhand der Figuren beschrieben. In der Zeichnung zeigen
- Fig. 1: schematisch ein Coriolis-Massedurchflussmessgerät, in dem ein Verfahren zum Ermitteln des Gasanteils in dem seine Messrohre durchströmenden Medium implementiert ist,
- Fig. 2a: schematisch ein Verfahren zum Ermitteln des Gasanteils in dem die Messrohre des Coriolis-Massedurchflussmessgeräts durchfließenden Mediums,
- Fig. 2b: schematisch eine weitere Ausgestaltung des Verfahrens zum Ermitteln des Gasanteils in dem ein Coriolis-Massedurchflussmessgerät durchströmenden Medium,
- Fig. 3: schematisch das Verfahren zum Ermitteln des Gasanteils unter Nutzung einer Indikatorgröße für eine Zweiphasenströmung,
- Fig. 4: eine weitere Variante des Verfahrens zum Ermitteln des Gasanteils unter Verwendung einer Indikatorgröße für eine Zweiphasenströmung,
- Fig. 5: eine weitere Ausgestaltung der vorgenannten Verfahren unter Verwendung des Mediumdrucks und
- Fig. 6: eine Ausgestaltung des Verfahrens unter Nutzung eines Grenzwertes für das Maß GVQ für den Gasanteil des durch das Messrohr strömenden Mediums.

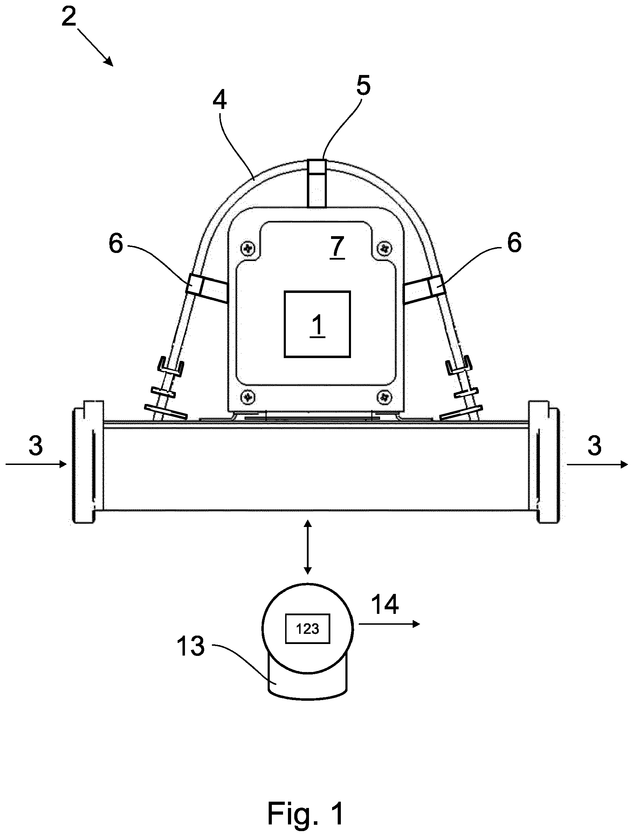

In den Fig. 1 bis 6 ist in verschiedenen Aspekten dargestellt ein Verfahren 1 zum Ermitteln des Gasanteils in dem ein Coriolis-Massedurchflussmessgerät 2 durchströmenden Medium 3. Das Coriolis-Massedurchflussmessgerät 2 weist im dargestellten Ausführungsbeispiel gemäß Fig. 1 zwei gebogene Messrohre 4, einen Schwingungserzeuger 5, zwei Schwingungsaufnehmer 6 und eine Ansteuerungs- und Auswerteeinheit 7 auf. In der Ansicht in Fig. 1 ist nur ein Messrohr 4 zu erkennen, das zweite Messrohr ist von dem ersten Messrohr 4 in dieser Ansicht verdeckt. Prinzipiell kommt es bei der vorliegenden Erfindung nicht darauf an, ob das Coriolis-Massedurchflussmessgerät gerade oder gebogene Messrohre aufweist, auch spielt die Zahl der Messrohre keine Rolle hinsichtlich der grundsätzlichen Umsetzung des hier interessierenden Verfahrens 1.

Im Betrieb werden die Messrohre 4 mit dem Schwingungserzeuger 5 zu einer harmonischen Schwingung in einem Grundschwingungsmode angeregt. Bei Vorliegen einer Strömung des Mediums 3 durch die Messrohre 4 wirken ein- und auslaufseitig entgegengerichtete Coriolis-Kräfte auf die Messrohre 4, wodurch ein überlagerter höherer Schwingungsmode erzeugt wird. Der Phasenunterschied zwischen der ein- und auslaufseitigen überlagerten Schwingung der Messrohre 4 ist ein Maß für den Massedurchfluss durch die Messrohre 4.

Wie eingangs ausgeführt worden ist, ist das Auftreten einer Zweiphasenströmung, also einer Strömung mit einem Gasanteil und einem flüssigen und/oder festen Strömungsanteil problematisch, weil Dämpfungs- und Rauscheffekte die Messung beeinträchtigen. Veränderliche Gasanteile bewirken zudem auch eine Änderung in der Dichte des Mediums 3 und damit auch eine Änderung der Resonanzfrequenz des schwingfähigen Elements bestehend aus den Messrohren 4 und dem in den Messrohren 4 strömenden Medium 3. Durch verschiedene regelungstechnische Maßnahmen kann es gelingen, den Arbeitspunkt des Coriolis-Massedurchflussmessgeräts 2 nachzuführen, indem also die Anregungsfrequenz der Schwingungserzeuger 5 der veränderlichen Resonanzfrequenz nachgeführt wird.

Die Ansteuerungs- und Auswerteeinheit 7 umfasst in dem Ausführungsbeispiel gemäß Fig. 1 einen digitalen Signalprozessor und entsprechende I/O-Schnittstellen zur Ansteuerung des Schwingungsanregers 5 und zum Auslesen der Schwingungssignale der Schwingungsaufnehmer 6. Die angesprochenen regelungstechnischen Maßnahmen sind programmtechnisch auf dem digitalen Signalprozessor umgesetzt.

Im Stand der Technik ist bekannt, durch Auswertung von Zustandsgrößen des Coriolis-Massedurchflussmessgeräts 2 das Auftreten einer Zweiphasenströmung zu erkennen und mit einer entsprechenden Indikatorgröße zu signalisieren, wobei eine solche Indikatorgröße keine zuverlässige quantitative Aussage über den Gasanteil im Medium 3 beinhaltet, sondern vielmehr eine binäre Aussage darüber macht, ob das Medium 3 einen Gasanteil aufweist oder nicht.

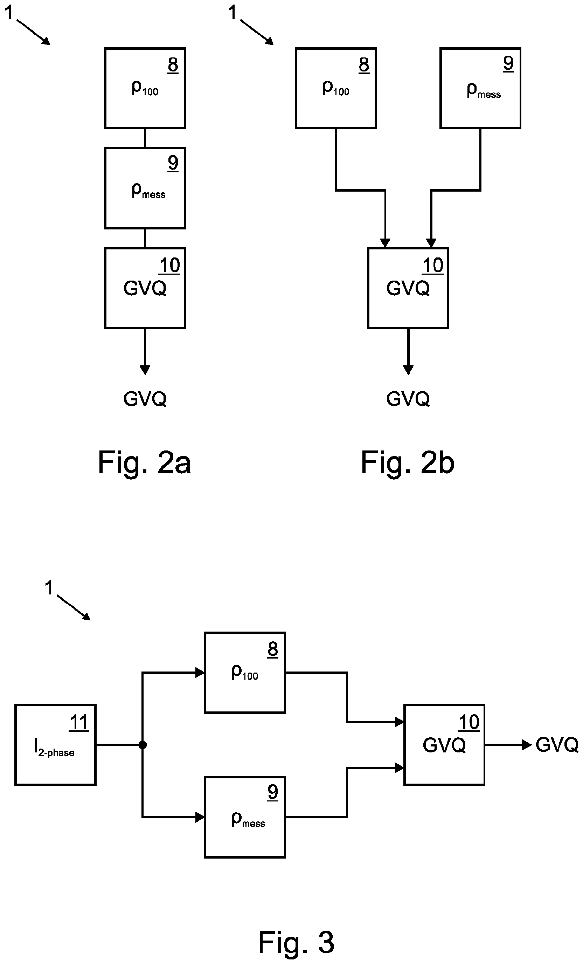

In den Fig. 2a, 2b ist ein Verfahren 1 dargestellt, mit dem der Gasanteil in dem das Coriolis-Massedurchflussmessgerät 2 durchströmenden Medium 3 bestimmt werden kann. Dazu ist vorgesehen, dass in einem ρ₁₀₀-Schritt 8 zunächst der Dichtewert ρ₁₀₀ des gaslosen Mediums ermittelt wird. In einem ρₘₑₛₛ-Schritt 9 wird der Dichtewert ρₘₑₛₛ des durch die Messrohre 4 strömenden Mediums 3 gemessen. Die Messung erfolgt hier über die Ermittlung der Resonanzfrequenz des Systems. Weiter wird dann in einem GVQ-Schritt 10 mit dem Dichtewert ρ₁₀₀ und dem Dichtewert ρₘₑₛₛ ein Maß GVQ für den Gasanteil des durch die Messrohre 4 strömenden Mediums 3 berechnet. Schlussendlich wird das Maß GVQ für den Gasanteil des durch die Messrohre 4 strömenden Mediums 3 ausgegeben. Die Unterschiede in den Fig. 2a und 2b sollen verdeutlichen, dass es auf die Reihenfolge der Ausführung des ρ₁₀₀-Schritts 8 und des ρₘₑₛₛ-Schritts 9 nicht ankommt. Beide Werte, also der Dichtewert ρ₁₀₀ und der Dichtewert ρₘₑₛₛ, sind für die Ermittlung des Maßes GVQ für den Gasanteil in dem Medium 3 erforderlich.

In dem Ausführungsbeispiel gemäß Fig. 2a ist der Dichtewert ρ₁₀₀ des gaslosen Mediums einfach als fester Wert vorgegeben, der Dichtewert ρ₁₀₀ ist also in diesem Fall bekannt. Dies ist dann sinnvoll, wenn praktisch ausgeschlossen werden kann, dass sich der Dichtewert ρ₁₀₀ des gaslosen Mediums ändert. In anderen Fällen kann der Dichtewert ρ₁₀₀ des gaslosen Mediums aber beispielsweise auch durch eine Messung ermittelt werden, was dann sinnvoll ist, wenn zu erwarten ist, dass sich der Dichtewert ρ₁₀₀ des gaslosen Mediums im Betrieb auch ändern kann.

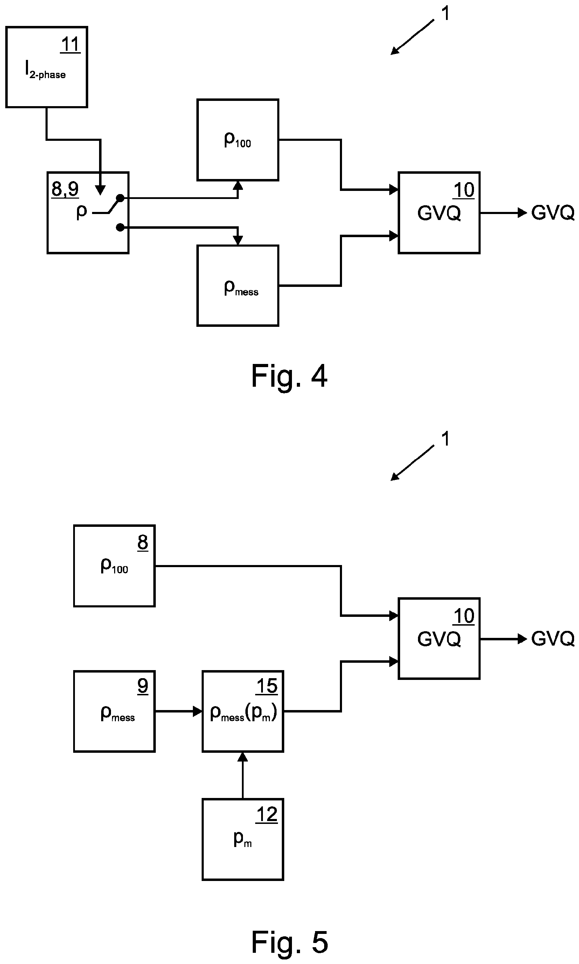

In den Fig. 3 und 4 ist dargestellt, dass eine Indikatorgröße I₂₋ₚₕₐₛₑ für das Vorliegen von Gaseinschlüssen in dem die Messrohre 4 durchströmenden Medium verwendet wird. Den Ausführungsbeispielen ist gemeinsam, dass zunächst in einem Indikatorschritt 11 die Indikatorgröße I₂₋ₚₕₐₛₑ für das Vorliegen von Gaseinschlüssen in dem die Messrohre 4 durchströmenden Medium 3 bestimmt wird. In den dargestellten Ausführungsbeispielen wird diese Indikatorgröße I₂₋ₚₕₐₛₑ fortwährend im Betrieb des Coriolis-Massedurchflussmessgeräts 2 bestimmt. Die Indikatorgröße I₂₋ₚₕₐₛₑ gibt nur Auskunft darüber, ob in dem Medium 3 eine Gasphase vorhanden ist oder nicht. Es ist hier demzufolge nur ein binäres Signal. Jedenfalls wird in einem Indikatorschritt 11 die Indikatorgröße I₂₋ₚₕₐₛₑ für das Vorliegen von Gaseinschlüssen in dem die Messrohre 4 durchströmenden Medium 3 bestimmt. Bei dem Ausführungsbeispiel gemäß Fig. 3 ist das Verfahren 1 so ausgestaltet, dass der ρ₁₀₀-Schritt 8 durch Messung der Dichte ρ des durch die Messrohre 4 strömenden Mediums 3 nur dann ausgeführt wird, wenn die Indikatorgröße I₂₋ₚₕₐₛₑ indiziert, dass das die Messrohre 4 durchströmende Medium 3 frei von Gaseinschlüssen ist. Der ρ₁₀₀-Schritt 8 wird also nur dann ausgelöst, wenn die Indikatorgröße I₂₋ₚₕₐₛₑ dies anzeigt, andernfalls wird der ρₘₑₛₛ-Schritt 9 zur Ermittlung des Dichtewerts ρₘₑₛₛ bei Vorliegen von Gaseinschlüssen berechnet. In dem GVQ-Schritt 10 wird dann immer der zuletzt ermittelte Wert ρ₁₀₀ des gaslosen Mediums 3 verwendet.

Bei dem Ausführungsbeispiel gemäß Fig. 4 wird in einem allgemeinen Schritt 8, 9 der Dichtewert p des Mediums 3 ermittelt. Es leuchtet ein, dass es sich bei diesem Dichtewert p um den Dichtewert ρ₁₀₀ des gaslosen Mediums 3 handelt, wenn die Indikatorgröße I₂₋ₚₕₐₛₑ anzeigt, dass das Medium 3 keinen Gasanteil aufweist. Für den Fall, dass das Medium 3 einen Gasanteil aufweist - und dies demzufolge von der Indikatorgröße I₂₋ₚₕₐₛₑ angezeigt wird - entspricht der Dichtewert p dem Dichtewert ρₘₑₛₛ des durch das Messrohr 4 strömenden Mediums 3. In dem kombinierten Schritt 8, 9 wird also immer allgemein die Dichte ρ des Mediums 3 gemessen und in Abhängigkeit von der Indikatorgröße I₂₋ₚₕₐₛₑ als Dichtewert ρ₁₀₀ oder als Dichtewert ρₘₑₛₛ abgespeichert.

Die in Fig. 5 gezeigte Weiterentwicklung des Verfahrens 1 zur Ermittlung des Gasanteils in dem das Coriolis-Massedurchflussmessgerät 2 durchströmenden Medium 3 zeichnet sich dadurch aus, dass der Mediumdruck pₘ des durch die Messrohre 4 strömenden Mediums gemessen 12 wird und mit dem gemessenen Mediumdruck pₘ und dem gemessenen Dichtewert ρₘₑₛₛ des durch das Messrohr 4 strömenden Mediums 3 ein korrigierter Dichtewert ρₘₑₛₛ(pₘ) ermittelt wird, wobei der korrigierte Dichtewert ρₘₑₛₛ(pₘ) dem weiteren Verfahren als gemessener Dichtewert ρₘₑₛₛ zugrunde gelegt wird, also insbesondere im GVQ-Schritt 10 zur Ermittlung des Gasanteils.

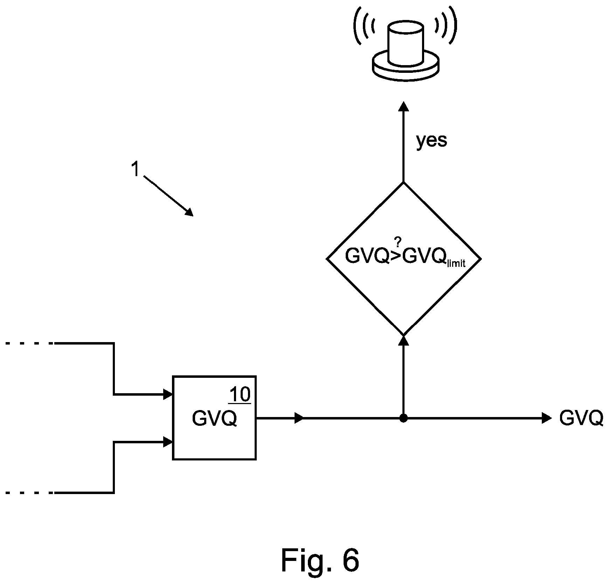

Schließlich ist in Fig. 6 gezeigt, dass das berechnete Maß GVQ für den Gasanteil des durch die Messrohre 4 strömenden Mediums 3 mit einem Grenzwert GVQₗᵢₘᵢₜ für den Gasanteil des durch das Messrohr 4 strömenden Mediums 3 verglichen wird und bei einer bestimmten Abweichung des berechneten Maßes GVQ vom Grenzwert GVQₗᵢₘᵢₜ eine Statusmeldung ausgegeben wird.

In Fig. 1 ist schematisch gezeigt, dass die Ansteuerungs- und Auswerteeinheit 7 mit einer Anzeigeeinheit 13 verbunden ist. Das Maß GVQ für den Gasanteil im Medium 3 kann hier direkt auf der Anzeigeeinheit 13 dargestellt werden. Es ist aber auch möglich, das Maß GVQ für den Gasanteil über eine Feldbusschnittstelle 14 auszugeben, beispielsweise an eine übergeordnete Leitwarte. In einer anderen Ausgestaltung wird das Maß GVQ einfach in die Ansteuerungs- und Auswerteeinheit 7 ausgegeben und dort abgespeichert. Der Wert für das GVQ-Maß kann dann auch intern, beispielsweise für regelungstechnische oder diagnostische Zwecke, weitergenutzt werden.

### Bezugszeichen

- 1: Verfahren
- 2: Coriolis-Massedurchflussmessgerät
- 3: Medium
- 4: Messrohre
- 5: Schwingungserzeuger
- 6: Schwingungsaufnehmer
- 7: Ansteuerungs- und Auswerteeinheit
- 8: ρ₁₀₀-Schritt
- 9: ρₘₑₛₛ-Schritt
- 10: GVQ-Schritt
- 11: Indikatorschritt
- 12: Messen des Mediumdrucks pₘ
- 13: Anzeigeeinheit
- 14: Feldbusschnittstelle
- 15: Ermitteln eines korrigierten Dichtewertes ρₘₑₛₛ(pₘ)

## Patentansprüche

1. Verfahren (1) zum Ermitteln des Gasanteils in dem ein Coriolis-Massedurchflussmessgerät (2) durchströmenden Medium (3), wobei das Coriolis-Massedurchflussmessgerät (2) mindestens ein Messrohr (4), mindestens einen Schwingungserzeuger (5), mindestens zwei Schwingungsaufnehmer (6) und mindestens eine Ansteuerungs- und Auswerteeinheit (7) aufweist, wobei das Verfahren (1) im Betrieb des Coriolis-Massedurchflussmessgeräts (2) durchgeführt wird, wobei in einem ρ₁₀₀-Schritt (8) der Dichtewert ρ₁₀₀ des gaslosen Mediums ermittelt wird und wobei in einem ρₘₑₛₛ-Schritt (9) der Dichtewert ρₘₑₛₛ des durch das Messrohr (4) strömenden Mediums (3) gemessen wird,
**dadurch gekennzeichnet,**
**dass** in einem GVQ-Schritt (10) mit dem Dichtewert ρ₁₀₀ des gaslosen Mediums und dem Dichtewert ρₘₑₛₛ des durch das Messrohr strömenden Mediums ein Maß GVQ für den Gasanteil des durch das Messrohr (4) strömenden Mediums (3) berechnet wird und
**dass** das Maß GVQ für den Gasanteil des durch das Messrohr (4) strömenden Mediums (3) ausgegeben wird.

2. Verfahren (1) nach Anspruch 1, **dadurch gekennzeichnet, dass** in einem Indikatorschritt (11) eine Indikatorgröße I₂₋ₚₕₐₛₑ für das Vorliegen von Gaseinschlüssen in dem das Messrohr (4) durchströmenden Medium (3) bestimmt wird, insbesondere wobei die Indikatorgröße I₂₋ₚₕₐₛₑ im Betrieb des Coriolis-Massedurchflussmessgeräts (2) fortwährend bestimmt wird.

3. Verfahren (1) nach Anspruch 2, **dadurch gekennzeichnet, dass** der ρ₁₀₀-Schritt (8) durch Messung der Dichte des durch das Messrohr (4) strömenden Mediums (3) dann ausgeführt wird, wenn die Indikatorgröße I₂₋ₚₕₐₛₑ für das Vorliegen von Gaseinschlüssen in dem das Messrohr durchströmenden Medium indiziert, dass das das Messrohr (4) durchströmende Medium (3) frei von Gaseinschlüssen ist, insbesondere wobei der zuletzt ermittelte Dichtewert ρ₁₀₀ des gaslosen Mediums in dem GVQ-Schritt verwendet wird.

4. Verfahren (1) nach Anspruch 2 oder 3, **dadurch gekennzeichnet, dass** der ρₘₑₛₛ-Schritt (9) dann ausgeführt wird, wenn die Indikatorgröße I₂₋ₚₕₐₛₑ für das Vorliegen von Gaseinschlüssen in dem das Messrohr durchströmenden Medium indiziert, dass das das Messrohr (4) durchströmende Medium (3) Gaseinschlüsse aufweist.

5. Verfahren (1) nach einem der Ansprüche 1 bis 4, **dadurch gekennzeichnet, dass** als Maß GVQ für den Gasanteil des durch das Messrohr (4) strömenden Mediums (3) das Gas-Volumen-Verhältnis GVR oder der Gas-Volumen-Anteil GVF berechnet wird.

6. Verfahren (1) nach einem der Ansprüche 1 bis 5, **dadurch gekennzeichnet, dass** in dem GVQ-Schritt (10) das Maß GVQ für den Gasanteil des durch das Messrohr (4) strömenden Mediums (3) unter der Annahme berechnet wird, dass die Dichte des Gasanteils vernachlässigbar, insbesondere null ist.

7. Verfahren (1) nach einem der Ansprüche 1 bis 5, **dadurch gekennzeichnet, dass** der Mediumdruck pₘ des durch das Messrohr (4) strömenden Mediums (3) gemessen (12) wird und mit dem gemessenen Mediumdruck pₘ des durch das Messrohr strömenden Mediums und dem gemessenen Dichtewert ρₘₑₛₛ des durch das Messrohr (4) strömenden Mediums (3) ein korrigierter Dichtewert ρₘₑₛₛ(pₘ) ermittelt (15) wird, wobei der korrigierte Dichtewert ρₘₑₛₛ(pₘ) dem weiteren Verfahren als gemessener Dichtewert ρₘₑₛₛ zugrunde gelegt wird.

8. Verfahren (1) nach einem der Ansprüche 1 bis 7, **dadurch gekennzeichnet, dass** das berechnete Maß GVQ für den Gasanteil des durch das Messrohr (4) strömenden Mediums (3) mit einem Grenzwert GVQₗᵢₘᵢₜ für den Gasanteil des durch das Messrohr (4) strömenden Mediums (3) verglichen wird und bei einer bestimmten Abweichung des berechneten Maßes GVQ für den Gasanteil des durch das Messrohr strömenden Mediums vom Grenzwert GVQₗᵢₘᵢₜ für den Gasanteil des durch das Messrohr strömenden Mediums eine Statusmeldung ausgegeben wird.

9. Coriolis-Massedurchflussmessgerät (2) mit mindestens einem von einem Medium (3) durchströmbarem Messrohr (4), mindestens einem Schwingungserzeuger (5), mindestens zwei Schwingungsaufnehmern (6) und mindestens einer Ansteuerungs- und Auswerteeinheit (7), wobei die Ansteuerungs- und Auswerteeinheit (7) so ausgestaltet ist, dass sie im Betrieb des Coriolis-Massedurchflussmessgeräts (2) in einem ρ₁₀₀-Schritt (8) den Dichtewert ρ₁₀₀ des gaslosen Mediums ermittelt und in einem ρₘₑₛₛ-Schritt (9) den Dichtewert ρₘₑₛₛ des durch das Messrohr (4) strömenden Mediums (3) misst, **dadurch gekennzeichnet,**
**dass** die Ansteuerungs- und Auswerteeinheit (7) ferner so ausgestaltet ist, dass sie im Betrieb des Coriolis-Massedurchflussmessgeräts (2) in einem GVQ-Schritt (10) mit dem Dichtewert ρ₁₀₀ des gaslosen Mediums und dem Dichtewert ρₘₑₛₛ des durch das Messrohr strömenden Mediums ein Maß GVQ für den Gasanteil des durch das Messrohr (4) strömenden Mediums (3) berechnet und
das Maß GVQ für den Gasanteil des durch das Messrohr (4) strömenden Mediums (3) ausgibt.

10. Coriolis-Massedurchflussmessgerät (2) nach Anspruch 9, **dadurch gekennzeichnet, dass** die Ansteuerungs- und Auswerteeinheit (7) so ausgebildet ist, dass das Verfahren gemäß einem der Ansprüche 2 bis 8 ausgeführt wird.

## Claims

1. Method (1) for determining the gas content in the medium (3) flowing through a Coriolis mass flowmeter (2), wherein the Coriolis mass flowmeter (2) has at least one measuring tube (4), at least one oscillation generator (5), at least two oscillation sensors (6) and at least one control and evaluation unit (7), wherein the method (1) is carried out during operation of the Coriolis mass flowmeter (2), wherein in a ρ₁₀₀-step (8) the density value ρ₁₀₀ of the gasless medium is determined and wherein in a ρₘₑₛₛ step (9) the density value ρₘₑₛₛ of the medium (3) flowing through the measuring tube (4) is measured,
**characterized in**
**that** in a GVQ step (10) the density value ρ₁₀₀ of the gasless medium and the density value ρₘₑₛₛ of the medium flowing through the measuring tube are used to calculate a measure GVQ for the gas fraction of the medium (3) flowing through the measuring tube (4), and
**that** the measure GVQ is output for the gas fraction of the medium (3) flowing through the measuring tube (4).

2. Method (1) according to claim 1, **characterized in that** in an indicator step (11) an indicator quantity I₂₋ₚₕₐₛₑ is determined for the presence of gas pockets in the medium (3) flowing through the measuring tube (4), in particular wherein the indicator quantity I₂₋ₚₕₐₛₑ is continuously determined during operation of the Coriolis mass flow meter (2).

3. Method (1) according to claim 2, **characterized in that** the ρ₁₀₀-step (8) is carried out by measuring the density of the medium (3) flowing through the measuring tube (4) when the indicator quantity I₂₋ₚₕₐₛₑ for the presence of gas pockets in the medium flowing through the measuring tube indicates that the medium (3) flowing through the measuring tube (4) is free of gas pockets, in particular wherein the last determined density value ρ₁₀₀ of the gas-free medium is used in the GVQ-step.

4. Method (1) according to any one of claims 2 or 3, **characterized in that** the ρₘₑₛₛ step (9) is carried out when the indicator quantity I₂₋ₚₕₐₛₑ for the presence of gas pockets in the medium flowing through the measuring tube indicates that the medium (3) flowing through the measuring tube (4) has gas pockets.

5. Method (1) according to any one of claims 1 to 4, **characterized in that** the gas-volume ratio GVR or the gas-volume fraction GVF is calculated as the measure GVQ for the gas fraction of the medium (3) flowing through the measuring tube (4).

6. Method (1) according to any one of claims 1 to 5, **characterized in that** in the GVQ step (10) the measure GVQ for the gas fraction of the medium (3) flowing through the measuring tube (4) is calculated under the assumption that the density of the gas fraction is negligible, in particular zero.

7. Method (1) according to any one of claims 1 to 5, **characterized in that** the medium pressure pₘ of the medium (3) flowing through the measuring tube (4) is measured (12) and a corrected density value ρₘₑₛₛ(pₘ) is determined (15) using the measured medium pressure pₘ of the medium flowiong through the measuring tube and the measured density value ρₘₑₛₛ of the medium (3) flowing through the measuring tube (4), wherein the corrected density value ρₘₑₛₛ(pₘ) is used as the basis for the further method as the measured density value ρₘₑₛₛ.

8. Method (1) according to any one of claims 1 to 7, **characterized in that** the calculated measure GVQ for the gas fraction of the medium (3) flowing through the measuring tube (4) is compared with a limit value GVQₗᵢₘᵢₜ for the gas fraction of the medium (3) flowing through the measuring tube (4), and a status message is output in the event of a determined deviation of the calculated measure GVQ for the gas fraction of the medium flowing through the measuring tube from the limit value GVQₗᵢₘᵢₜ for the gas fraction of the medium flowing through the measuring tube.

9. Coriolis mass flow meter (2) with at least one measuring tube (4) through which a medium (3) can flow, at least one oscillation generator (5), at least two oscillation sensors (6) and at least one control and evaluation unit (7), wherein the control and evaluation unit (7) is configured in such a way that, during operation of the Coriolis mass flow meter (2), it determines the density value ρ₁₀₀ of the gas-free medium in a ρ₁₀₀ step (8) and measures the density value ρₘₑₛₛ of the medium (3) flowing through the measuring tube (4) in a ρₘₑₛₛ step (9), **characterized in**
**that** the control and evaluation unit (7) is further configured in such a way that, during operation of the Coriolis mass flow meter (2), in a GVQ step (10), it calculates a measure GVQ for the gas fraction of the medium (3) flowing through the measuring tube (4) using the density value ρ₁₀₀ of the gasless medium and the density value ρₘₑₛₛ of the medium flowing through the measuring tube and
outputs the measure GVQ for the gas fraction of the medium (3) flowing through the measuring tube (4).

10. Coriolis mass flowmeter (2) according to claim 9, **characterized in that** the control and evaluation unit (7) is designed such that the method according to any one of claims 2 to 8 is carried out.

## Revendications

1. Procédé (1) de détermination de la teneur en gaz dans le milieu (3) traversant un débitmètre massique de Coriolis (2), le débitmètre massique de Coriolis (2) comportant au moins un tube de mesure (4), au moins un générateur de vibrations (5), au moins deux capteurs de vibrations (6) et au moins une unité de commande et d'évaluation (7), le procédé (1) étant mis en oeuvre pendant le fonctionnement du débitmètre massique de Coriolis (2), la valeur de densité ρ₁₀₀ du milieu sans gaz étant déterminée dans une étape ρ₁₀₀ (8) et la valeur de densité ρₘₑₛₛ du milieu (3) s'écoulant à travers le tube de mesure (4) étant mesurée dans une étape ρₘₑₛₛ (9),
**caractérisé en ce que**
une dimension GVQ de la teneur en gaz du milieu (3) s'écoulant à travers le tube de mesure (4) est calculée dans une étape GVQ (10) avec la valeur de densité ρ₁₀₀ du milieu sans gaz et la valeur de densité ρₘₑₛₛ du milieu s'écoulant à travers le tube de mesure, et
la dimension GVQ de la teneur en gaz du milieu (3) s'écoulant à travers le tube de mesure (4) est délivrée en sortie.

2. Procédé (1) selon la revendication 1, **caractérisé en ce qu'**une grandeur d'indication I₂₋ₚₕₐₛₑ de la présence d'inclusions de gaz dans le milieu (3) circulant à travers le tube de mesure (4) est déterminée dans une étape d'indication (11), notamment la grandeur d'indication I_{2pbase} étant déterminée en continu pendant le fonctionnement du débitmètre massique de Coriolis (2) .

3. Procédé (1) selon la revendication 2, **caractérisé en ce que** l'étape ρ₁₀₀ (8) de mesure de la densité du milieu (3) circulant à travers le tube de mesure (4) est réalisée seulement lorsque la grandeur d'indication I₂₋ₚₕₐₛₑ relative à la présence d'inclusions de gaz dans le milieu circulant dans le tube de mesure indique que le milieu (3) circulant dans le tube de mesure (4) est exempt d'inclusions de gaz, en particulier la dernière valeur de densité ρ₁₀₀ déterminée du milieu sans gaz est utilisée dans l'étape GVQ.

4. Procédé (1) selon la revendication 2 ou 3, **caractérisé en ce que** l'étape ρₘₑₛₛ (9) est réalisée seulement lorsque la grandeur d'indication I₂₋ₚₕₐₛₑ relative à la présence d'inclusions de gaz dans le milieu traversant le tube de mesure indique que le milieu (3) circulant dans le tube de mesure (4) contient des inclusions de gaz.

5. Procédé (1) selon l'une des revendications 1 à 4, **caractérisé en ce que** le rapport volumique de gaz GVR ou la fraction volumique de gaz GVF est calculé comme dimension GVQ de la teneur en gaz du milieu (3) circulant dans le tube de mesure (4).

6. Procédé (1) selon l'une des revendications 1 à 5, **caractérisé en ce qu'**à l'étape GVQ (10) la dimension GVQ de la teneur en gaz du milieu (3) circulant à travers le tube de mesure (4) est calculée avec l'hypothèse que la densité de la teneur en gaz est négligeable, en particulier nulle.

7. Procédé (1) selon l'une des revendications 1 à 5, **caractérisé en ce que** la pression pₘ du milieu (3) circulant à travers le tube de mesure (4) est mesurée (12) et une valeur de densité corrigée ρₘₑₛₛ(pₘ) est déterminée (15) avec la pression pₘ mesurée du milieu circulant à travers le tube de mesure et la valeur de densité mesurée ρₘₑₛₛ du milieu (3) s'écoulant à travers le tube de mesure (4), la valeur de densité corrigée ρₘₑₛₛ(pₘ) servant de base à la poursuite du procédé comme valeur de densité mesurée ρₘₑₛₛ.

8. Procédé (1) selon l'une des revendications 1 à 7, **caractérisé en ce que** la dimension GVQ calculée de la teneur en gaz du milieu (3) circulant dans le tube de mesure (4) est comparée à une valeur limite GVQₗᵢₘᵢₜ de la teneur en gaz du milieu (3) s'écoulant à travers le tube de mesure (4) et un message d'état est délivré pour un écart déterminé entre la dimension calculée GVQ de la teneur en gaz du milieu s'écoulant à travers le tube de mesure et la valeur limite GVQₗᵢₘᵢₜ de la teneur en gaz du milieu traversant le tube de mesure.

9. Débitmètre massique de Coriolis (2) comprenant au moins un tube de mesure (4) qui peut être traversé par un milieu (3), au moins un générateur de vibrations (5), au moins deux capteurs de vibrations (6) et au moins une unité de commande et d'évaluation (7), l'unité de commande et d'évaluation (7) étant conçue de manière à déterminer la valeur de densité ρ₁₀₀ du milieu sans gaz dans une étape ρ₁₀₀ (8) pendant le fonctionnement du débitmètre massique Coriolis (2) et mesurer dans une étape ρₘₑₛₛ (9) la valeur de densité ρₘₑₛₛ du milieu (3) s'écoulant à travers le tube de mesure (4),
**caractérisé en ce que**
l'unité de commande et d'évaluation (7) est en outre conçue de manière à calculer une dimension GVQ de la teneur en gaz du milieu (3) s'écoulant à travers le tube de mesure (4) pendant le fonctionnement du débitmètre massique de Coriolis (2) dans une étape GVQ (10) avec la valeur de densité ρ₁₀₀ du milieu sans gaz et la valeur de densité ρₘₑₛₛ du milieu s'écoulant à travers le tube de mesure et délivrer la dimension GVQ de la teneur en gaz du milieu (3) s'écoulant à travers le tube de mesure (4).

10. Débitmètre massique de Coriolis (2) selon la revendication 9, **caractérisé en ce que** l'unité de commande et d'évaluation (7) est conçue de manière à mettre en oeuvre le procédé selon l'une des revendications 2 à 8.
